Europäisches Patentamt

(19) European Patent Office

Office européen des brevets

(11) Veröffentlichungsnummer: **0 039 036**
**B1**

(12) **EUROPÄISCHE PATENTSCHRIFT**

(45) Veröffentlichungstag der Patentschrift:
20.03.85

(51) Int. Cl.⁴: **H 04 L 11/00, G 06 F 13/00**

(21) Anmeldenummer: **81102995.8**

(22) Anmeldetag: **18.04.81**

(54) **Datenübertragungssystem.**

(30) Priorität: **30.04.80 GB 8014288**

(43) Veröffentlichungstag der Anmeldung:
**04.11.81 Patentblatt 81/44**

(45) Bekanntmachung des Hinweises auf die Patenterteilung:
**20.03.85 Patentblatt 85/12**

(84) Benannte Vertragsstaaten:
**DE FR GB NL SE**

(56) Entgegenhaltungen:
**DE - A - 2 700 144
GB - A - 1 467 726**

**HAWLETT-PACKARD JOURNAL, 30. Jahrgang, Nr. 8, August 1979, Amstelveen, NL D.H. GUEST "An HP-IB extender for distributed instrument systems" Seiten 26-32
ELEKTRONIK, 27. Jahrgang, Heft 4, April 1978, München, DE D. EHNERT "Das Zeitverhalten einer IEC-Bus-Version für grössere Entfernungen" Seiten 62-64
IEEE Standard 488-1978**

(73) Patentinhaber: **Hewlett-Packard Limited, South Queensferry West Lothian EH30 9TG Scotland (GB)**

(72) Erfinder: **Guest, David Hubert, 31 Newmills Crescent Balerno, Midlothian EH14 5SX Scotland (GB)**
Erfinder: **Roubaud, Peter Raymond, 24 Stewart Place Kirkliston, West Lothian EH29 9BQ Scotland (GB)**

(74) Vertreter: **Schulte, Knud, Dipl.-Ing., c/o Hewlett-Packard GmbH Europ. Patent- und Lizenzabteilung Postfach 1430 Herrenberger Strasse 130, D-7030 Böblingen (DE)**

## Beschreibung

Die Erfindung betrifft ein Datenübertragungssystem gemäss dem Oberbegriff des Anspruchs 1.

Ein Bus-System, das die im Oberbegriff des Anspruchs 1 beschriebenen Daten- bzw. Steuersignale verwendet, ist aus dem IEEE-Standard 488-1978 bekannt. Ein derartiges Bus-System ermöglicht das Zusammenschalten einer Vielzahl von Geräten, wie Messgeräten, Prozessüberwachungs- und Steuergeräten und Computern, so dass Datensignale bitparallel und byteseriell von einem bestimmten Gerät zu anderen Geräten übertragen werden können, selbst wenn die Geräte unterschiedliche Geschwindigkeiten der Datenaufnahme bzw. Datenabgabe haben, da sich die Datenübertragungsgeschwindigkeit jeweils an das langsamste am Bus-System angeschlossene Gerät anpasst. Ein Hauptmerkmal dieses Standards ist eine bestimmte Abfolge von Steuersignalen, sogenannten Handshake-Signalen, bei der Byte-Übertragung. Ein erstes dieser Steuersignale zeigt an, dass die Daten auf den Datenleitungen des Bus-Systems gültig sind, ein zweites zeigt an, dass die Datenempfänger bereit zur Aufnahme von Datensignale sind und ein drittes Steuersignal zeigt an, dass alle Datenempfänger die Datensignale aufgenommen haben. Selbstverständlich sind auch noch andere als die genannten Steuersignale vorhanden, jedoch sind diese für das Verständnis der vorliegenden Erfindung nicht erheblich.

Es ist oftmals notwendig, zwei oder mehrere lokale oder auch entfernte Bus-Systeme miteinander zu verbinden, so dass Daten zwischen Geräten dieser Bus-Systeme übertragen werden können.

Aus GB-A-1 467 726 ist eine Schaltung zum Koppeln zweier lokaler Bus-Systeme bekannt, welche jeweils ein Steuergerät zur Koordination der Daten- und Steuersignale aufweisen. Sollen Datensignale von einem zu dem anderen Bus-System übertragen werden, wird die Kopplungsschaltung aktiviert und je nach Übertragungsrichtung übernimmt eines der beiden Steuergeräte die Kontrolle über die Datenübertragung, während das jeweils andere stillgelegt wird. Werden keine Datensignale zwischen den beiden Bus-Systemen übertragen, arbeiten die beiden Systeme völlig unabhängig voneinander.

Bei einem lokalen Bus-System der geschilderten Art darf die Entfernung zwischen den einzelnen Geräten nur so gross sein (in der Regel 20 m), dass die zu übertragenden Datensignale auch zu den weit entfernten Geräten gelangt sind, bevor die vorgegebene Daten-Stabilisierungszeit verstrichen ist.

Aus DE-AI-2 700 144 ist ein Datenübertragungssystem zum Überbrücken grösserer Entfernungen als 20 m zwischen Datensende- und Empfangsvorrichtungen bekannt. Es handelt sich hierbei jedoch nicht um ein System zum Übertragen von Daten zwischen zwei Bus-Systemen, sondern nur zwischen einzelnen Geräten, wobei die Datenübertragung in ziemlich komplizierter Form erfolgt, da das Übertragen von Adressen über das Verbindungsleitungssystem dadurch vermieden wird, dass jeder Empfangsvorrichtung ein bestimmtes Zeitfenster zugeordnet ist, während dessen sie die für sie bestimmte Information bitseriell aufnimmt.

Ein Datenübertragungssystem mit einer Erweiterungsschaltung gemäss dem Oberbegriff von Anspruch 1 ist in «Hewlett-Packard Journal», August 1979, Seiten 26 bis 32 beschrieben. Bei dieser Erweiterungsschaltung führt die erste Sende-/Empfangseinrichtung mit der mit ihr verbundenen Byte-Quelle eine erste vollständige Steuersignalfolge zum Empfang eines Byte aus und das Byte wird dann an die zweite Sende-/Empfangseinrichtung übertragen, welche anschliessend mit den mit ihr verbundenen Empfängern eine zweite vollständige Steuersignalfolge zum Übertragen eines Byte ausführt. Da die beiden Steuersignalfolgen auf den jeweiligen Bus-Systemen völlig unabhängig voneinander ablaufen, sind eines oder mehrere Bytes zeitweilig nur innerhalb der Erweiterungsschaltung, d.h. in «Transitspeicherung», gespeichert. Abhängig von den Eigenschaften der an die beiden Bus-Systeme angeschlossenen Geräte und vom Systemprogramm, insbesondere wenn ein anderes Gerät zum Sender gemacht wird, kann es vorkommen, dass eine (im allgemeinen Falle) unbestimmte Anzahl von Bytes in Transitspeicherung verbleibt. In jedem Fall, in dem dies auftreten kann, müssen die beiden Sende-/Empfangseinrichtungen gegenseitig das Auftreten erkennen und entscheiden, was mit den gespeicherten Bytes zu geschehen hat. Um unter solchen Umständen eine hohe «Transparenz» zu erreichen, d.h. zu erreichen, dass sich die Sende-/Empfangseinrichtung funktionell wie ein beliebiges Gerät am Bus-System verhält, so dass keine Anpassung des den Datenverkehr regelnden Steuerprogrammes erforderlich ist, muss die Erweiterungsschaltung sehr komplexe Algorithmen ausführen können, und ist daher in der Herstellung relativ teuer.

Gegenüber diesem Stand der Technik liegt der vorliegenden Erfindung die Aufgabe zugrunde, ein Datenübertragungssystem gemäss dem Oberbegriff des Anspruchs 1 derart weiterzubilden, dass sich eine wesentlich einfachere, transparente Bus-Erweiterungsschaltung ohne das Problem der Transitspeicherung ergibt.

Diese Aufgabe wird bei einem Datenübertragungssystem gemäss dem Oberbegriff erfindungsgemäss durch das Kennzeichen von Anspruch 1 gelöst.

Die im Gegenstand der Erfindung enthaltene Erweiterungsschaltung stellt sicher, dass keine Transitspeicherung von Bytes zwischen den beiden Bus-Systemen stattfindet. Neue Datensignale können erst dann von der Datenquelle an das erste Bus-System geliefert werden, wenn alle Empfänger an beiden Bus-Systemen die vorherigen Datensignale aufgenommen haben. Die mit dem ersten Bus-System verbundene Sende-/Empfangseinrichtung wirkt mit dem ersten Bus-System funktionell wie einer der übrigen Empfänger zusammen.

Prinzipiell ist beim Betrieb der Erweiterungsschaltung gemäss Anspruch 1 nicht festgelegt, in welcher Reihenfolge untereinander die drei folgenden Zeitpunkte auftreten:

1. Das zweite Bus-System erhält Datensignale,

2. das erste Steuersignal für das erste Bus-System trifft bei der ersten Sende-/Empfangseinrichtung ein,

3. das die Gültigkeit der über die Erweiterungsschaltung übertragenen Datensignale anzeigende Steuersignal trifft bei der zweiten Sende-/Empfangseinrichtung ein.

Weiterhin versteht es sich, dass Datensignale nicht nur vom ersten zum zweiten Bus-System, sondern entsprechend der im Anspruch 1 angegebenen Weise ebenso vom zweiten zum ersten Bus-System übertragen werden können.

Durch die in der erwähnten IEEE-Norm festgelegte Dimensionierung der elektrischen Komponenten des Bus-Systems wird die Anzahl der maximal an ein Bus-System anschliessbaren Geräte auf einen bestimmten Wert begrenzt. Nun gestattet es die erfindungsgemässe Erweiterungsschaltung nicht nur, räumlich entfernte, sondern auch eng beieinanderliegende Bus-Systeme zusammenzuschalten, so dass auf diese Weise mehr als die nach dem Standard maximal anschliessbaren Geräte zu einem einzigen lokalen Bus-System zusammengefasst werden können. Die beiden Sende-/Empfangseinrichtungen können dabei in einem einzigen Gerät vereinigt sein. Durch Verwenden zusätzlicher Erweiterungsschaltungen kann die Zahl der zu einem Bus-System zusammenschliessbaren Geräte entsprechend vergrössert werden. Da jede Erweiterungsschaltung transparent ist und Transitspeicherung vermeidet, wirken alle Geräte funktionell so zusammen, als ob sie an einem einzigen grossen Bus-System angeschlossen wären, so dass das Steuerprogramm für das Gesamtsystem nicht komplexer ist als das für ein einziges Bus-System. Auch können durch Verwenden mehrerer Erweiterungsschaltungen verschiedene räumlich entfernte Unterbussysteme zu einem einzigen Bus-System zusammengefasst werden.

Die Datenübertragung zwischen den beiden Sende-/Empfangseinrichtungen kann über eine galvanische Verbindung oder eine induktive oder opto-elektronische Kopplung oder auch eine Kopplung durch Lichtleiter erfolgen. Bei Verwenden nicht-galvanischer Kopplungen ergibt sich der weitere Vorteil, dass die Signal- und Massepotentiale, mit denen die Geräte auf verschiedenen Unterbussen arbeiten, unterschiedlich sein können.

Entsprechend dem eingangs erwähnten Standard sind das erste, zweite und dritte Steuersignal für das erste bzw. für das zweite Bus-System jeweils durch einen von zwei logischen Zuständen realisierbar, die zwei verschiedenen Spannungspegeln (z. B. 0 und + 5 Volt) auf der ersten, zweiten und dritten Steuerleitung beider Busse entsprechen. Dies ist jedoch kein notwendiges Merkmal der vorliegenden Erfindung. Andere Signaldarstellungen wie Impulse, frequenzmodulierte Signale oder ähnliches könnten auch benutzt werden, ohne dass der Erfindungsgedanke verlassen wird. Auch das vierte und fünfte Steuersignal können durch verschiedenartige Signaldarstellungen realisiert sein.

Die Erfindung wird im folgenden anhand von Ausführungsbeispielen in Verbindung mit der zugehörigen Zeichnung erläutert. In der Zeichnung zeigen:

Figur 1 ein Blockschaltbild, das schematisch die Verbindungen zur Daten- und Steuersignalübertragung gemäss IEEE-Standard 488-1978 darstellt;

Figur 2 ein Zeitfolgediagramm der in der Schaltung nach Figur 1 auftretenden Steuersignale;

Figur 3 ein Blockschaltbild einer bevorzugten Ausführungsform der vorliegenden Erfindung, das schematisch ein Erweiterungssystem für die Schaltung nach Figur 1 darstellt;

Figur 4 ein Zeitfolgediagramm der Schaltung gemäss Figur 3;

Figur 5 ein logisches Zustandsdiagramm nebst zugeordneter Tabelle für die Ausgangszustände des in Figur 3 enthaltenen empfangsseitigen Umsetzers;

Figur 6 ein detailliertes Blockschaltbild des in Figur 3 enthaltenen empfangseitigen Umsetzers;

Figur 7 ein logisches Zustandsdiagramm nebst zugeordneter Tabelle für die Ausgangszustände des in Figur 3 enthaltenen sendeseitigen Umsetzers;

Figur 8 ein detailliertes Blockschaltbild des in Figur 3 enthaltenen sendeseitigen Umsetzers;

Figur 9 ein Blockschaltbild, in dem dargestellt ist, wie eine im wesentlichen beliebige Anzahl von Erweiterungsschaltungen gemäss Figur 3 zu einer im wesentlichen beliebigen Struktur von Untersystemen verbunden werden kann.

Tabelle 1 Signal Definitionen

| a) Signal<br>b) inverses Signal | Mnemoniken<br>(‾‾ bedeutet invers) | Logischer Zustand<br>T = Ja (trifft zu)<br>F = Nein (trifft nicht zu) | Elektrischer Signal-Pegel |
|---|---|---|---|
| a) Daten gültig | DAV | T | Niedrig |
| b) Daten nicht gültig | $\overline{\text{DAV}}$ | F | Hoch |
| a) Nicht bereit für Datenempfang | NRFD | T | Niedrig |
| b) Bereit für Datenempfang | $\overline{\text{NRFD}}$ | F | Hoch |

Tabelle 1    Signal Definitionen (Fortsetzung)

| | | | | |
|---|---|---|---|---|
| a) | Nicht Daten aufge-<br>nommen | NDAC | T | Niedrig |
| b) | Daten aufgenom-<br>men | $\overline{\text{NDAC}}$ | F | Hoch |
| a) | Neues Byte anneh-<br>men | tnb | T | Hoch |
| b) | Kein neues Byte<br>annehmen | $\overline{\text{tnb}}$ | F | Niedrig |
| a) | Bereit für neues<br>Byte | rnb | T | Hoch |
| b | Nicht bereit für<br>neues Byte | $\overline{\text{rnb}}$ | F | Niedrig |

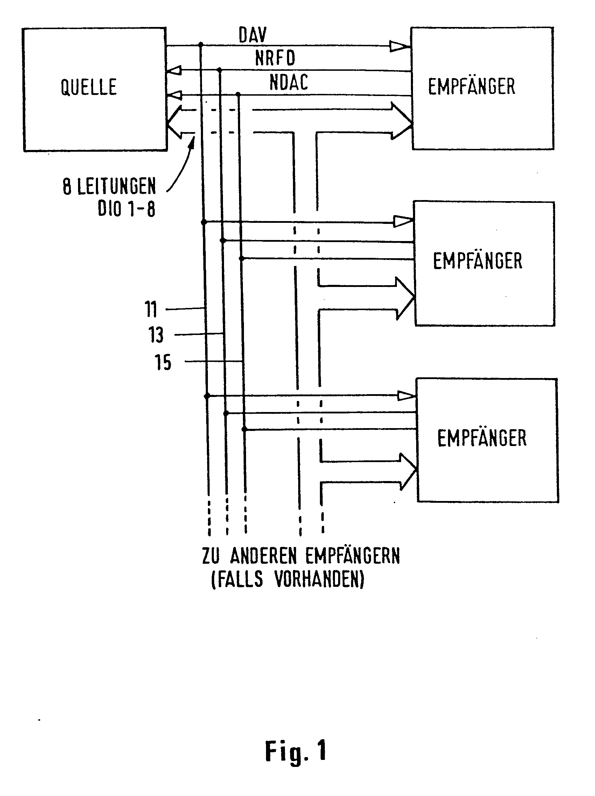

Figur 1 zeigt das bekannte Standard-Interface-Bussystem, dessen Betriebsweise im folgenden zur Erleichterung des Verständnisses der Erfindung kurz erläutert wird.

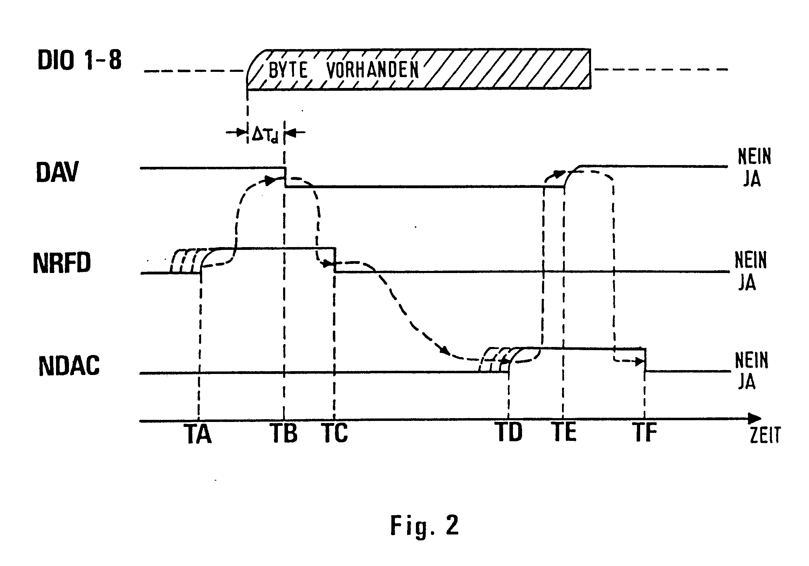

Die Übertragung von Daten- oder Befehls-bytes auf den acht Leitungen DIO1 bis DIO8 des Standard Bus zwischen einem Quellengerät und einem oder mehreren Empfangsgeräten wird mittels dreier Steuerleitungen 11, 13 und 15 gesteuert. Andere Busleitungen, zum Beispiel Organisationsleitungen, sind nicht dargestellt. Figur 2 zeigt die Betriebssequenz bei Übertragung eines byte von einer Quelle zu verschiedenen Empfängern, wie dies im Standard beschrieben ist. Wenn durch die Quelle die Leitung 11 (DAV, Daten gültig) in den logischen Zustand «Ja» (niedriger elektrischer Pegel) versetzt wird, bedeutet dies, dass die Daten auf den DIO-Leitungen gültig sind und von den Empfängern richtig gelesen werden können. Wenn das Signal NRFD (nicht bereit für Datenaufnahme) auf Leitung 13 den Zustand «Ja» (niedriger Pegel) hat, bedeutet dies, dass mindestens einer der Empfänger noch nicht bereit für den Empfang des nächsten byte ist. Wenn das Signal NDAC (nicht Daten aufgenommen) auf Leitung 15 den Zustand «Ja» (niedriger Pegel) hat, bedeutet dies, dass mindestens einer der Empfänger noch nicht das derzeitige byte aufgenommen hat. Eine Auflistung der in Verbindung mit der vorliegenden Erfindung wesentlichen Signale, ihre Namen, Mnemoniken, logischen Zustände und elektrischen Signalpegel findet sich in Tabelle 1.

Wie in Figur 2 dargestellt ist, ist die Betriebssequenz typischerweise wie folgt. NRFD geht beim Übergang TA in den Zustand «Nein», was anzeigt, dass alle Empfänger (insbesondere der «letzte») bereit für die Aufnahme irgendeines byte sind, das die Quelle abgeben kann. Dies erlaubt der Quelle, DAV auf «Ja» zu setzen, wodurch angezeigt wird, dass die DIO-Leitungen 1 bis 8 nunmehr in gültiger Weise das byte der Quelle führen (Übergang TB), vorausgesetzt die zusätzliche Bedingung ist erfüllt, dass eine Verzögerungszeit $\Delta T_d$ (zum Beispiel 2 µs) abgelaufen ist, nachdem die Quelle das byte auf die Bus-Leitungen DIO 1 bis 8 geschaltet hat. Gleichzeitig werden die Empfänger für den Empfang von Daten freigegeben. Ein Empfänger (der «früheste») setzt dann NRFD auf «Ja», um anzuzeigen, dass er nicht länger empfangsbereit ist (Übergang TC), und die anderen Empfänger folgen entsprechend ihren eigenen Geschwindigkeiten. Der Übergang TD bedeutet, dass alle Empfänger das byte aufgenommen haben. Nachdem sie festgestellt hat, dass alle Empfänger nunmehr die Daten aufgenommen haben, setzt die Quelle DAV auf «Nein» um anzuzeigen, dass die DIO-Leitungen nun nicht mehr als gültige Daten tragend angesehen werden dürfen (Übergang TE). Durch Erfassung des Zustands «Nein» des Signals DAV setzt ein Empfänger dann das Signal NDAC auf «Ja» (Übergang TF), und die anderen Empfänger folgen gemäss ihrer eigenen Geschwindigkeiten. Damit ist das System für die nächste byte-Übertragung bereit. Nähere Einzelheiten der Betriebsweise finden sich in den Zustandsdiagrammen der Beschreibung des IEEE-Standard 488-1978 oder entsprechenden Schriften.

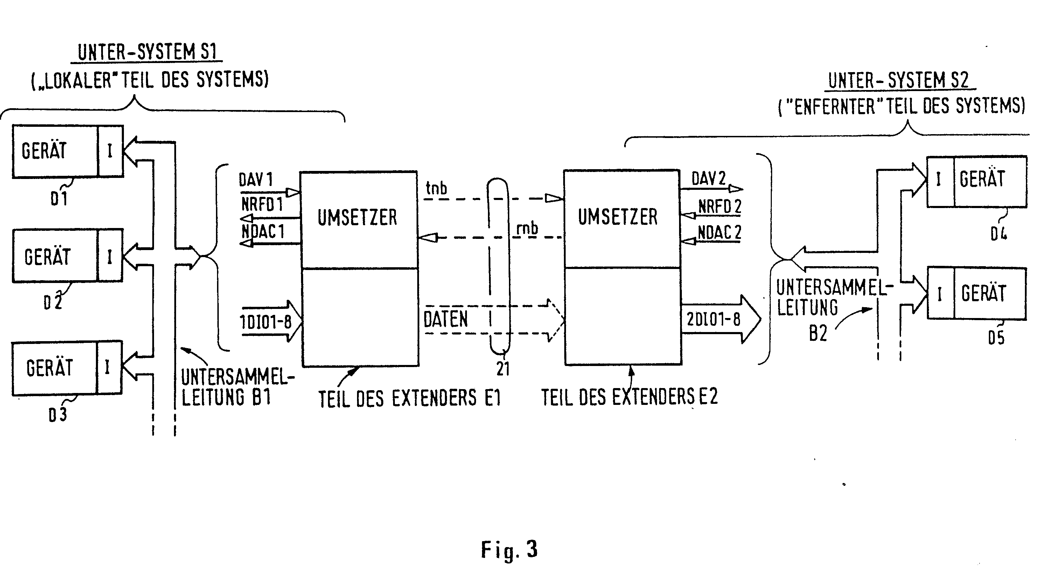

In Figur 3 ist dargestellt, wie zwei Extendereinheiten E1 und E2, welche die erste und zweite Sende-/Empfangseinrichtung enthalten, und die zusammen mit dem Übertragungsmedium die Erweiterungsschaltung bilden, entsprechend einer bevorzugten Ausführungsform der Erfindung zur Verbindung eines lokalen Untersystems S1 mit einem entfernten Untersystem S2 verwendet werden. Das Untersystem S1 hat eine Untersammelleitung (Bus) B1, und das entfernte Untersystem S2 hat eine Untersammelleitung (Bus) B2.

An jeden Unterbus ist über je einen Stadard-Interface I eine Anzahl von Geräten angeschlossen. Der Begriff «Gerät» wird in diesem Zusammenhang als Sammelbegriff für Messgeräte, Steuergeräte, Computer usw. benutzt, die mit dem Standard-Bus kompatibel sind. Im Beispiel gemäss Figur 3 sind an den Unterbus B1 Geräte D1 bis D3 angeschlossen, während an den Unterbus B2 Geräte D4 und D5 angeschlossen sind. Die wesentlichen Verbindungswege sind für eine Situation dargestellt, bei der ein Gerät (zum Beispiel D1) am Unterbus B1 bytes abgibt und Geräte an beiden Unterbussen (jedoch speziell am Unterbus B2) bytes aufnehmen. In der Praxis hat das Extender-Paar selbstverständlich die Fähigkeit, bytes auch in der entgegengesetzten Richtung zu übertragen. Zur Vereinfachung der Beschreibung sind jedoch nur die Kommunikationswege dargestellt, die für eine einzige Richtung erforderlich sind. Die Kommunikationswege für die Gegenrichtung sind mit denen der dargestellten Richtung völlig identisch.

DAV1, NRFD1 und NDAC1 sind die Standard-Bus-Signale, durch welche der Extender E1 mit der Quelle (und eventuell Empfängern) am Unterbus B1 kommuniziert, und 1DIO1–8 sind die acht Datensignale von der Quelle. Entsprechend sind DAV2, NRFD2 und NDAC2 die Standard-Bus-Signale, durch welche der Extender E2 mit einem oder mehreren Empfängern am Unterbus B2 kommuniziert, und 2DIO1–8 sind die acht Datensignale zu den Empfängern am Unterbus B2. (Tatsächlich würden die Extender auch ohne angeschlossene Empfänger arbeiten, jedoch ist dies ein trivialer Fall und hat keine praktische Bedeutung.) Andere Standard-Bus-Leitungen sind nicht dargestellt, da sie zur Erläuterung nicht erforderlich sind. Die Extender E1 und E2 haben bezüglich ihrer zugeordneten Unterbusse ein Interfaceverhalten, das für die anderen Geräte von einem Standard-Bus-Interface nicht zu unterscheiden ist, können aber durch ihr Zusammenwirken vom Gesichtspunkt des Systems her gesehen bytes zwischen den Unterbussen im wesentlichen transparent und effektiv ohne Transitspeicherung übertragen, wie weiter unten gezeigt wird.

Im Betrieb müssen die Extender E1 und E2 als ein Paar angesehen werden. Zur Erklärung der Funktionsweise ist es jedoch zweckmässig, deren Zusammenwirken in zwei Teile zu zerlegen, wie in Figur 3 dargestellt ist. Bei einer typischen Ausführungsform der vorliegenden Erfindung befinden sich in den beiden Extendern zwei Teile einer logischen Zustandsschaltung für die Steuersignale, die jeweils mit einem der beiden Unterbusse verbunden sind. Der mit dem Unterbus B1 (an den auch die Quelle angeschlossen ist) verbundene Teil wird im folgenden als empfangseitiger (bezüglich B1) Umsetzer bezeichnet, während der mit dem Unterbus B2 (an den im allgemeinen Empfänger angeschlossen sind) verbundene Teil im folgenden als sendeseitiger (bezüglich B2) Umsetzer bezeichnet ist. Am Unterbus B1 können sich weitere Empfänger befinden. Zwischen den Extendern verläuft ein Datenübertragungsmedium 21, dessen Art für das Wesen der Erfindung unwesentlich ist, solange es in der Lage ist, logische Zustandsinformationen zwischen den Extendern zu übertragen. Bei der dargestellten typischen Ausführungsform überträgt es zumindest die logischen Variablen tnb (neues byte annehmen) vom empfangseitigen zum sendeseitigen Umsetzer, rnb (bereit für nächstes byte) vom sendeseitigen zum empfangseitigen Umsetzer, sowie Daten, die den acht Datensignalen entsprechen.

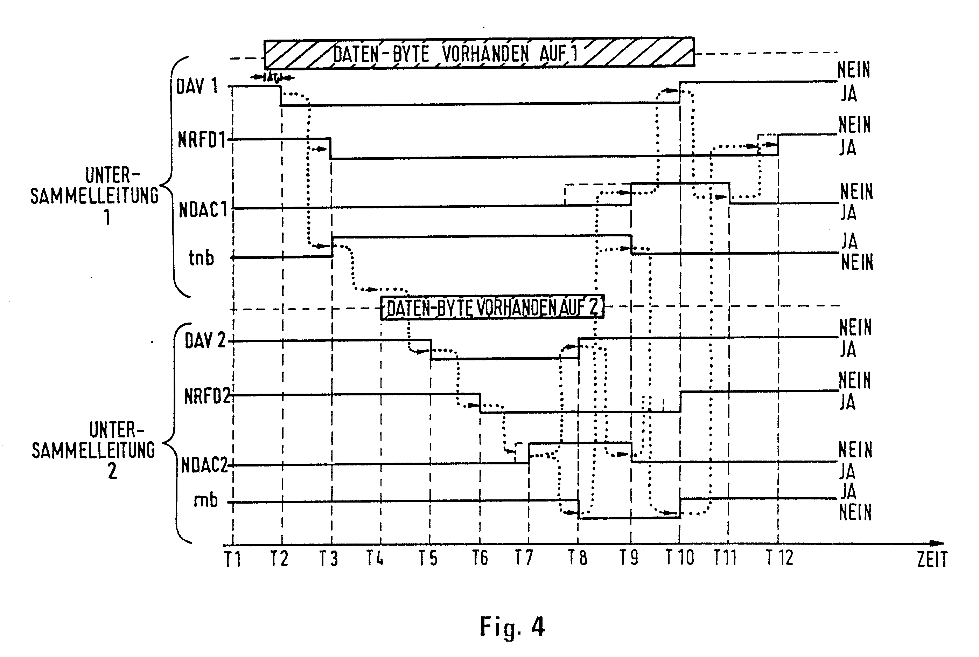

Figur 4 zeigt in ähnlicher Weise wie Figur 2 eine typische Zustandsfolge auf den beiden Unterbussen, an der die beiden Extender teilnehmen und die die Übertragung von bytes ohne effektive Transitspeicherung ermöglicht. tnb und rnb sind interne logische Kommunikationsvariablen, die eine zweckmässige Betriebskoordinierung der empfangseitigen und sendeseitigen Umsetzer ermöglichen. Sie stellen jedoch nicht die einzige Möglichkeit für die erforderliche Kommunikation dar. Das wesentliche Merkmal ist die Reihenfolge der Zustände, die auf den drei Steuerleitungen jedes der beiden Unterbusse auftreten.

Wenn eine Anzahl von Datenbytes übertragen werden soll, tritt die Reihenfolge gemäss Figur 4 wiederholt auf. In der folgenden Beschreibung ist jedoch nur ein Zyklus beschrieben. Der empfangseitige Umsetzer (an dessen Unterbus B1 das gerade als Quelle arbeitende Gerät angeschlossen ist) reagiert auf DAV1 und gibt NRFD1 und NDAC1 ab. Andere Geräte am Unterbus B1 können ebenfalls auf DAV1 reagieren und NRFD1 und NDAC1 abgeben. Der sendeseitige Umsetzer gibt DAV2 ab und reagiert auf NRFD2 und NDAC2 auf dem Unterbus B2. Im allgemeinen reagieren am Unterbus B2 mehrere Geräte auf DAV2 und geben NRFD2 und NDAC2 ab (obwohl im trivialen Fall das System auch ohne andere Geräte am Unterbus B2 arbeitet). Die Definition der logischen Zustände und elektrischen Signalpegel der beteiligten Signale sind ebenfalls in Tabelle 1 angegeben, wo auch tnb und rnb definiert sind.

Die in Figur 4 dargestellten Übergangszeitpunkte T1 bis T12 stellen nur die Reihenfolge des Auftretens der einzelnen Zustände dar. Die Zeitintervalle zwischen ihnen sind in Wirklichkeit nicht gleich.

Zwei zum gleichen Zeitpunkt dargestellte Übergänge sind nicht notwendigerweise koinzident, sind jedoch im allgemeinen abhängig vom Übergang beim vorherigen Zeitpunkt. Figur 4 stellt nur eine typische Zustandsfolge dar. In praktischen Situationen können kleinere Abweichungen vorkommen, die von der Art und den Eigengeschwindigkeiten der Extender und Geräte abhängen. Im folgenden wird eine typische Zustandsfolge mit den Ereignissen zu den Zeitpunkten T1 bis T12 beschrieben.

T1: Dieser Zeitpunkt wird als Start der Zustandsfolge betrachtet, wenngleich dies nicht unbedingt sein muss. NRFD1 und NRFD2 haben den Zustand «Nein», NDAC1 und NDAC2 den Zustand «Ja». Dies zeigt an, dass alle Geräte einschliesslich empfangseitiger Umsetzer bereit für Datenaufnahme sind. rnb hat den Zustand «Ja», da der sendeseitige Umsetzer dem empfangseitigen Umsetzer anzeigt, dass er bereit ist, falls erforderlich, auf den Unterbus B2 ein neues byte zu geben.

T2: Zu Beginn ihrer Beteiligung am Zyklus setzt die jeweilige Quelle (am Unterbus B1) DAV1 auf «Ja», nachdem eine Verzögerungszeit $\Delta T_d$ verstrichen ist, wie oben in Verbindung mit Figur 2 erwähnt wurde. Damit wird ein byte auf den Unterbus B1 gegeben.

T3: Der empfangseitige Umsetzer und alle Empfänger am Unterbus B1 setzen NRFD1 auf «Ja» um anzuzeigen, dass sie nicht mehr bereit für den Datenempfang sind. tnb wird zur etwa gleichen Zeit ebenfalls auf «Ja» gesetzt und zwar als Information an den sendeseitigen Umsetzer, dass die begleitende byte-Information gültig ist und somit die Zustandsfolge auf dem Unterbus B2 ablaufen kann.

T4: Signal tnb kommt beim sendeseitigen Umsetzer an. Wenn es gleichzeitig mit dem neuen byte ankommt, ist eine Verzögerung erwünscht, bevor DAV2 auf «Ja» gesetzt wird, damit sichergestellt ist, dass sich die acht Datensignale 2DIO1–8 eingeschwungen haben.

T5: Soweit erforderlich, ist nun eine angemessene Verzögerungszeit seit T4 verstrichen. Vorausgesetzt dass NRFD2 den Zustand «Nein» hat, was anzeigt, dass alle Empfänger am Unterbus B2 bereit für die Aufnahme eines neuen byte sind, kann DAV2 durch den sendeseitigen Umsetzer auf «Ja» gesetzt werden. Wenn NRFD2 noch nicht den Zustand «Nein» hat, muss DAV2 entsprechend warten, bis es den Zustand «Ja» annehmen kann.

T6: Die Empfänger am Unterbus B2 reagieren auf den Zustand «Ja» von DAV2, indem sie NRFD2 auf «Ja» setzen.

T7: Wenn der letzte Empfänger am Unterbus B2 angezeigt hat, dass er das byte gelesen hat, geht NDAC2 auf «Nein», wodurch dem sendeseitigen Umsetzer mitgeteilt wird, dass das byte gelesen worden ist.

T8: Der sendeseitige Umsetzer setzt DAV2 auf «Nein», da die byte-Daten auf dem Unterbus B2 nicht mehr benötigt werden. Etwa gleichzeitig wird rnb auf «Nein» gesetzt, und zwar als Nachricht an den empfangseitigen Umsetzer, dass alle Empfänger im Besitz der byte-Daten sind.

T9: In Reaktion auf den Zustand «Nein» von rnb kann der empfangseitige Umsetzer das Signal NDAC1 auf «Nein» setzen, da alle Empfänger am Unterbus B2 im Besitz der Daten sind. Tatsächlich nimmt das Signal NDAC1 natürlich nicht den Zustand «Nein» an, bevor auch alle Empfänger am Unterbus B1 NDAC1 auf «Nein» gesetzt haben um anzuzeigen, dass auch sie im Besitz der byte-Daten sind.

Etwa zur gleichen Zeit wird tnb auf «Nein» gesetzt, und zwar als Nachricht an den sendeseitigen Umsetzer, dass rnb auf «Ja» gesetzt werden kann (bereit für den nächsten Zyklus). Diese Nachricht könnte dann weggelassen werden, wenn ein Übertragungsverfahren verwendet würde, das nicht die Rückkehr von rnb in seinen Ursprungszustand erfordert, zum Beispiel wenn diskrete Nachrichten statt logischen Pegeln übermittelt werden.

Etwa gleichzeitig setzen die Empfänger am Unterbus B2 das Signal NDAC2 auf «Ja» in Reaktion darauf, dass DAV2 den Zustand «Nein» annimmt.

T10: rnb nimmt den Zustand «Ja» an (bereit für den nächsten Zyklus). Diese Nachricht könnte je nach benutztem Übertragungsverfahren weggelassen werden (siehe oben). Etwa gleichzeitig nimmt NRFD2 den Zustand «Nein» an, wenn der letzte Empfänger am Unterbus B2 anzeigt, dass er für die Aufnahme weiterer Daten bereit ist.

Etwa gleichzeitig nimmt DAV1 den Zustand «Nein» an, und zwar in Reaktion auf den von NDAC1 angenommenen Zustand «Nein», da die byte-Daten nicht mehr benötigt werden.

T11: Die Empfänger am Unterbus B1 (und ebenso der empfangseitige Umsetzer) setzen NDAC1 auf «Ja» in Reaktion auf das Signal DAV1, das den Zustand «Nein» annimmt.

T12: Die Empfänger am Unterbus B1 (und ebenso der empfangseitige Umsetzer) setzen NRFD1 auf «Nein» um anzuzeigen, dass sie nunmehr alle bereit für den Empfang neuer Daten sind.

Der Zyklus ist nun abgeschlossen, und alle Zustände sind wieder die gleichen wie zum Anfangszeitpunkt T1.

Aus Figur 4 und den vorstehenden Erläuterungen lässt sich leicht ersehen, dass die Zustandsfolge, wie sie sich seitens des empfangseitigen Umsetzers der Quelle am Unterbus B1 darbietet, im wesentlichen die gleiche ist als wenn die beiden Unterbusse ohne Extender miteinander verbunden wären. Das gleiche gilt für die Zustandsfolge, die sich seitens des sendeseitigen Umsetzers den Empfängern am Unterbus B2 darbietet. In beiden Fällen treten die Zustände aus der Sicht jedes Gerätes mit oder ohne Extender in im wesentlichen gleicher Reihenfolge auf, auch wenn sich der zeitliche Abstand zwischen aufeinanderfolgenden Zuständen etwas verändern kann. Bei entsprechend dem genannten Standard aufgebauten Geräten bleiben solche Zeitunterschiede aber ohne Folgen für den Interface-Betrieb.

Bei Verwendung des in der beschriebenen Weise miteinander verbundenen Umsetzerpaars entsteht effektiv keine Transitspeicherung, wenn bytes zwischen den voneinander getrennten Unterbussen B1 und B2 übertragen werden, was aus den bereits genannten Gründen wichtig ist. Es ist erkennbar, dass eine erste Nachricht vom empfangseitigen Umsetzer am Unterbus B1 zum sendeseitigen Umsetzer am Unterbus B2 gesandt wird, um diesem mitzuteilen, dass neue byte-Daten für die Übertragung zu den Empfängern am Unterbus B2 verfügbar sind und dass eine zweite Nachricht vom sendeseitigen Umsetzer zum empfangseitigen Umsetzer gesandt wird, um diesem mitzuteilen, dass alle Empfänger am Unterbus B2 die byte-Daten aufgenommen haben und dass der empfangseitige Umsetzer der Quelle anzeigen kann, dass die Übertragung abgeschlossen ist.

Die in Figur 3 dargestellten Umsetzer, die an der typischen Zustandsfolge gemäss Figur 4 teilnehmen, können in verschiedenster Weise als logische Zustandsschaltungen aufgebaut sein.

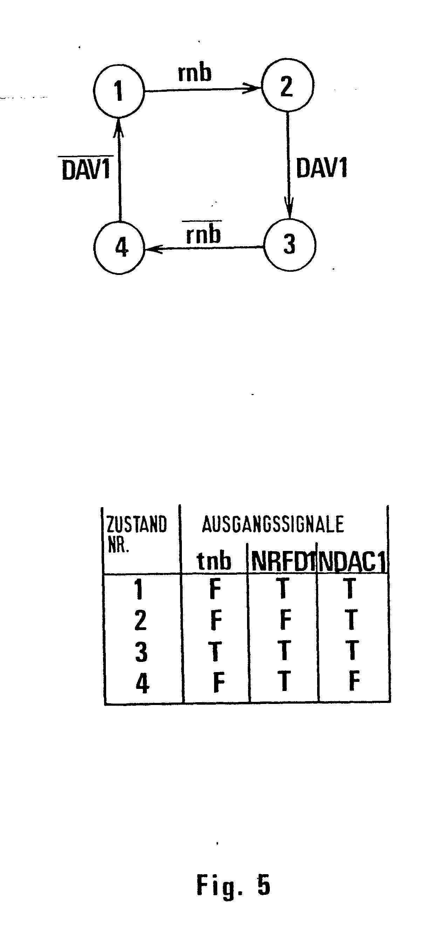

Figur 5 zeigt ein typisches logisches Zustandsdiagramm, das sich für die Anwendung im empfangseitigen Umsetzer eignet und welches vier interne Zustände aufweist. Wie dargestellt ändert der empfangseitige Umsetzer seinen Zustand entsprechend den bestätigenden («Ja»-)Werten der Eingangsvariablen, die an den logischen Zuständen verbindenden Pfeilen angegeben sind. Die zugeordnete Tabelle gibt die logischen Werte der drei Ausgangsvariablen des empfangseitigen Umsetzers für jeden der vier Zustände an.

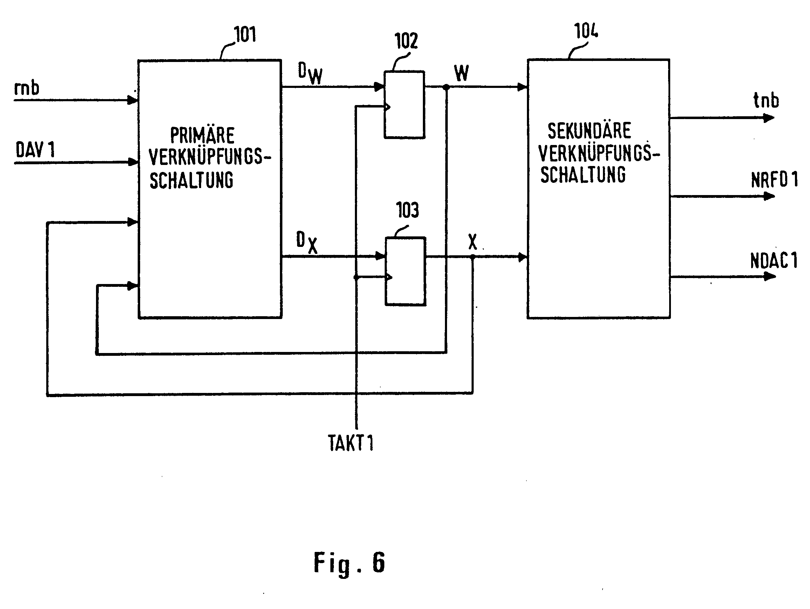

Figur 6 zeigt eine mögliche Schaltungsstruktur zur Realisierung des empfangseitigen Umsetzers mit den Eigenschaften gemäss Figur 5. Flip-Flops 102 und 103 sind vom D-Typ üblicher Charakteristik, deren Ausgangssignale Variablen W und X sind und deren Eingangssignale mit $D_w$ bzw. $D_x$

bezeichnet sind. Die Taktgabe der Flip-Flops 102 und 103 erfolgt durch ein Taktsignal TAKT 1 das grundsätzlich eine beliebige Frequenz haben kann, die jedoch üblicherweise hoch genug ist, um eine angemessene Arbeitsgeschwindigkeit zu gewährleisten. Eine primäre Verknüpfungsschaltung 101 erzeugt die Ausgangssignale $D_w$ und $D_x$ als Boole'sche Funktionen der Eingangssignale rnb und DAV1 und der Variablen W und X. Diese Funktionen sind durch die folgenden Ausdrücke (1) und (2) dargestellt, in denen die Symbole $\wedge$ und $\vee$ die logischen Verknüpfungen UND bzw. ODER darstellen und wobei ein Balken über eine Variable ihre logische Invertierung bedeutet. Die UND-Verknüpfung hat Vorrang vor der ODER-Verknüpfung, sofern nicht anders bezeichnet.

$$D_w = W \vee X \wedge DAV1 \wedge X \vee DAV1 \wedge W \quad (1)$$

$$D_x = \overline{W} \wedge X \vee rnb \wedge \overline{W} \vee rnb \wedge X \quad (2)$$

Eine sekundäre Verknüpfungsschaltung 104 erzeugt die Ausgangssignale tnb, NRFD1 und NDAC1 als Funktionen der Variablen W und X. Diese Funktionen sind im folgenden durch die Ausdrücke (3), (4) und (5) gegeben.

$$tnb = W \wedge X \quad (3)$$

$$NRFD1 = W \vee \overline{X} \quad (4)$$

$$NDAC1 = \overline{W} \vee X \quad (5)$$

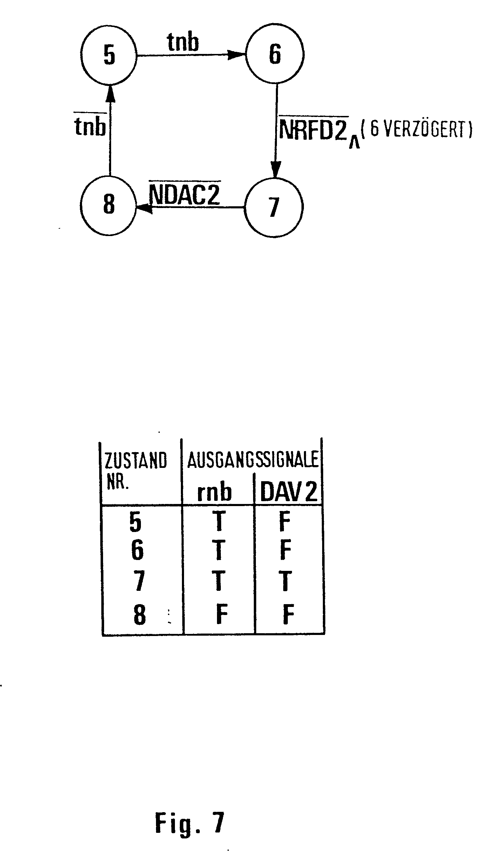

Figur 7 zeigt ein typisches logisches Zustandsdiagramm, das sich für den sendeseitigen Umsetzer eignet und vier interne Zustände aufweist. Wie dargestellt ist, ändert der sendeseitige Umsetzer seinen Zustand entsprechend den bestätigenden («Ja»-)Werten der bei den Pfeilen angegebenen Variablen. Der Übergang vom Zustand 6 zum Zustand 7 soll nur dann stattfinden, wenn sowohl NRFD2 den Zustand «Nein» hat als auch die Schaltung für eine Mindestzeitspanne im Zustand 6 verweilt hat. Diese Mindestzeitspanne, die typischerweise 2 µs betragen kann, ist erforderlich, um sicherzustellen, dass das Signal DAV2 durch Zustand 7 nicht in den Zustand «Ja» versetzt werden kann, bevor sich die byte-Signale 2DIO1–8 in ihrem neuen Zustand eingeschwungen haben. Diese Mindestzeitspanne kann vernachlässigt werden, wenn auf andere Weise sichergestellt werden kann, dass das byte in den Datensignalen 2DIO1–8 früh genug vorhanden ist, bevor DAV2 den Zustand «Ja» annimmt, zum Beispiel wenn das byte vom Extender E1 einige Zeit vor tnb ankommt. Die zugeordnete Tabelle zeigt die logischen Zustände der beiden Ausgangsvariablen des sendeseitigen Umsetzers für jeden seiner vier Zustände.

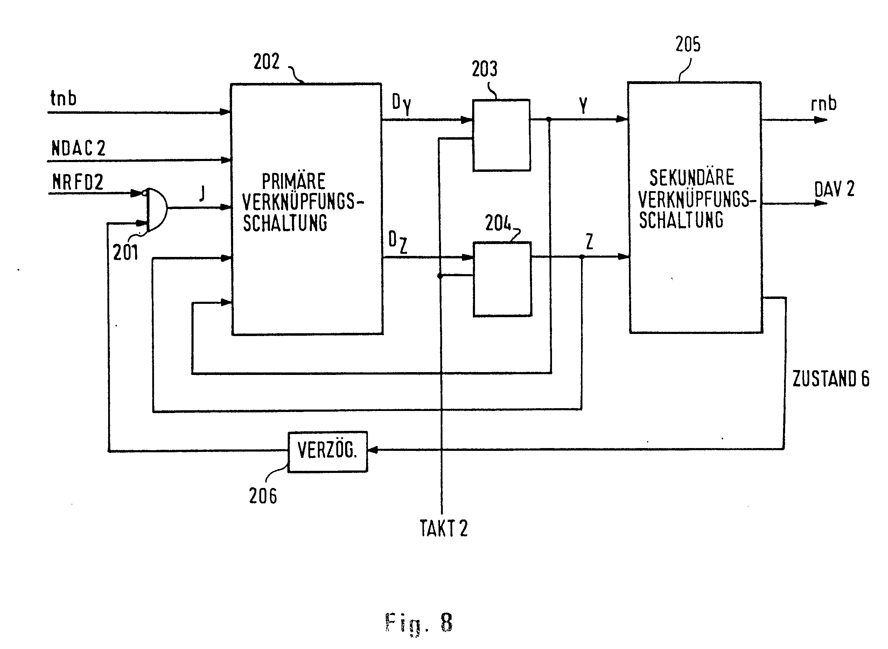

Figur 8 zeigt eine mögliche Schaltungsstruktur zur Realisierung des sendeseitigen Umsetzers gemäss Figur 7. Flip-Flops 203 und 204 vom D-Typ haben Ausgänge Y bzw. Z und Dateneingänge $D_y$ bzw. $D_z$. Die Taktsteuerung der Flip-Flops 203 und 204 erfolgt durch ein Taktsignal TAKT2 von grundsätzlich beliebiger Frequenz, die jedoch hoch genug sein sollte, um eine angemessene Arbeitsgeschwindigkeit zu gewährleisten. Eine primäre Verknüpfungsschaltung 202 erzeugt Ausgangssignale $D_y$ und $D_z$ als Funktionen der Eingangssignale tnb und NDAC2 und der Variablen J, Y und Z. Die Variable J kommt von einem UND-Glied 201, dessen Eingangssignale $\overline{NRFD2}$ und eine Variable sind, die den Zustand «Ja» annimmt, nachdem die Schaltung den Zustand 6 angenommen hat und danach die bereits erwähnte Verzögerungszeit abgelaufen ist, die durch ein Verzögerungsglied 206 vorgegeben wird. J ergibt sich aus dem Ausdruck (6).

$$J = \overline{NRFD2} \wedge (\text{Zustand 6 verzögert}) \quad (6)$$

$D_y$ ergibt sich aus Ausdruck (7), und $D_z$ aus Ausdruck (8).

$$D_y = Y \wedge Z \vee Z \wedge J \vee Y \wedge tnb \quad (7)$$

$$D_z = \overline{Y} \wedge Z \vee Z \wedge NDAC2 \vee \overline{Y} \wedge tnb \quad (8)$$

Eine sekundäre Verknüpfungsschaltung 205 erzeugt die Ausgangssignale rnb und DAV2 sowie ein Ausgangssignal, das während des Zustandes 6 seinen «Ja» Zustand annimmt. Diese Ausgangssignale sind Funktionen von Y und Z und ergeben sich aus den Ausdrücken (9), (10) und (11).

$$rnb = \overline{Y} \vee Z \quad (9)$$

$$DAV2 = Y \wedge Z \quad (10)$$

$$\text{Zustand 6} = \overline{Y} \wedge Z \quad (11)$$

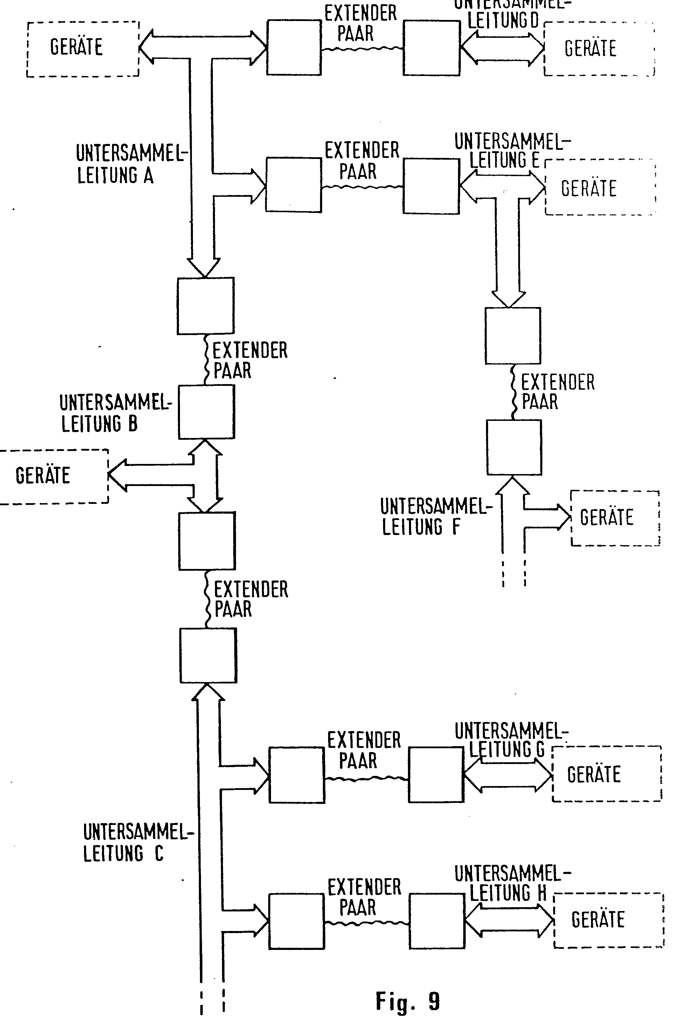

Es ist offensichtlich, wenn eine Erweiterung auf ein zweites Bündel von Geräten an einem entfernten Unterbus mittels eines beschriebenen Extenderpaares möglich ist, auch eine Erweiterung auf eine beliebige Anzahl zusätzlicher Gerätebündel möglich ist, wenn zusätzliche Extenderpaare verwendet werden. In Figur 9 sind solche Schaltungsmöglichkeiten dargestellt. Unterbus A bildet zusammen mit Unterbussen D, E und B ein System von Extenderpaaren in einer typischen sternförmigen Konfiguration, während die Unterbusse A, E und F in Tandem-Konfiguration angeordnet sind. Wie in Figur 9 dargestellt ist, sind beliebige Kombinationen von Stern- und Tandem-Konfigurationen möglich. Welche dieser Anordnungen auch immer in einem System verwendet werden, passt sich dieses automatisch an die zusätzlichen Bündel von Geräten an, ohne dass in deren Aufbau eine Änderung erforderlich wäre. D.h., die Steuersignalfolge in dem Unterbus, an den die jeweilige Quelle angeschlossen ist, kommt nicht zum Abschluss, bevor die entsprechenden Signalfolgen auf allen anderen Unterbussen abgeschlossen sind.

Die Erfindung wurde im vorstehenden im Hinblick auf zwei oder mehrere Unterbussysteme beschrieben, die räumlich voneinander entfernt sind, so dass eine Vergrösserung der Entfernung zwischen bus-kompatiblen Geräten erreicht werden kann. Es ist aber auch vorteilhaft, wenn ein Bussystem in zwei oder mehr Unterbussysteme aufgeteilt wird, auch wenn diese räumlich eng beieinander liegen.

Entsprechend dem im IEEE-Standard 488-1978 beschriebenen Interface-Verfahren und wegen der praktischen Begrenzung der Anzahl von mit den Bus-Leitungen verbindbaren Ansteuerschaltungen können maximal 15 Geräte in einem einzelnen System miteinander verbunden werden. Bei Benutzung eines Extenderpaares entsprechend der obigen Beschreibung können effektiv 28 Geräte zusammengeschaltet werden. Die Anzahl wird unbegrenzt, wenn eine beliebige Anzahl von Extenderpaaren zur Anwendung kommt. Allerdings ist durch die Anzahl möglicher Geräteadressen eine praktische Grenze gesetzt. Bei solchen Anwendungen sollte man nicht mehr von Extender-Paaren sprechen, da dann beide Umsetzer in einem einzigen Gerät vereinigt werden können.

**Patentansprüche**

1. Datenübertragungssystem zum Übertragen von Datensignalen zwischen einem ersten Sammelschienen-(Bus-)System (B1) an einem ersten Ort, welches mit einer lokalen Datenquelle (D1) und gegebenenfalls mit einem oder mehreren lokalen Datenempfängern (D2, D3) verbunden ist, und einem gleichartigen zweiten Sammelschienen-(Bus-)System (B2) an einem zweiten Ort, welches mit einem oder mehreren lokalen Datenempfängern (D4, D5) und gegebenenfalls mit einer lokalen Datenquelle verbunden ist, mit einer Erweiterungsschaltung, die eine mit dem ersten Bus-System verbindbare erste Sende-/Empfangseinrichtung, eine mit dem zweiten Bus-System verbindbare zweite Sende-/Empfangseinrichtung und ein die beiden Sende-/Empfangseinrichtungen verbindendes Übertragungsmedium (21) für Daten- und Steuersignale aufweist, wobei für die zeitliche Aufeinanderfolge von Daten- und Steuersignalen jedes Bus-Systems gilt:
- die lokale Datenquelle gibt Datensignale bitparallel an die Datenleitungen (DIO 1–8) des Bus-Systems,
- die lokale Datenquelle gibt an alle lokalen Datenempfänger ein die Aufnahme von Datensignalen freigebendes erstes Steuersignal (DAV) ab, wenn nach Lieferung der Datensignale an die Datenleitungen eine vorgegebene Stabilisierungszeit ($T_d$) verstrichen ist und wenn ein die Bereitschaft aller lokalen Datenempfänger zur Aufnahme von Datensignalen bestätigendes zweites Steuersignal ($\overline{NRFD}$) erzeugt wurde,
- die lokalen Datenempfänger nehmen Datensignale von den Datenleitungen (DIO 1–8) auf,
- das erste Steuersignal (DAV) wird beendet, nachdem ein die Aufnahme von Datensignalen durch alle lokalen Datenempfänger bestätigendes drittes Steuersignal ($\overline{NDAC}$) erzeugt wurde,
- die lokale Datenquelle gibt neue Datensignale an die Datenleitungen, dadurch gekennzeichnet, dass in jedem Zyklus zum Übertragen von Datensignalen über die beiden Sende-/Empfangseinrichtungen nacheinander folgende Daten- und Steuersignale erzeugt werden:
- nachdem die Datenquelle (D1) des ersten Bus-Systems (B1) Datensignale an die Datenleitungen (1 DIO 1–8) dieses Bus-Systems gegeben hat, werden diese Datensignale über die erste und die zweite Sende-/Empfangseinrichtung an die Datenleitungen (2 DIO 1–8) des zweiten Bus-Systems (B2) gegeben, erhält die erste Sende-/Empfangseinrichtung von der Datenquelle des ersten Bus-Systems das erste Steuersignal (DAV1), erhält die zweite Sende-/Empfangseinrichtung von der ersten ein viertes Steuersignal (tnb) und löst nach dessen Empfang und nach Ablauf einer vorgegebenen Stabilisierungszeit ($T_d$) der Datensignale des zweiten Bus-Systems und wenn das zweite Steuersignal ($\overline{NRFD2}$) für das zweite Bus-System erzeugt wurde, das erste Steuersignal (DAV2) für das zweite Bus-System aus,
- die Datenempfänger des zweiten Bus-Systems nehmen Datensignale von den Datenleitungen des zweiten Bus-Systems auf,
- die zweite Sende-/Empfangseinrichtung erhält das dritte Steuersignal ($\overline{NDAC2}$) für das zweite Bus-System,
- die erste Sende-/Empfangseinrichtung erhält von der zweiten ein fünftes Steuersignal ($\overline{rnb}$), welches die Aufnahme der Datensignale durch alle Datenempfänger des zweiten Bus-Systems bestätigt,
- das erste Steuersignal (DAV1) für das erste Bus-System wird beendet, nachdem das die Aufnahme von Datensignalen durch alle Datenempfänger des ersten und des zweiten Bus-Systems bestätigende dritte Steuersignal ($\overline{NDAC1}$) für das erste Bus-System erzeugt wurde und
- die Datenquelle des ersten Bus-Systems gibt zu Beginn eines neuen Zyklus neue Datensignale an die Datenleitungen des ersten Bus-Systems.

2. Datenübertragungssystem nach Anspruch 1, dadurch gekennzeichnet, dass das erste, zweite und dritte Steuersignal für das erste bzw. das zweite Bus-System jeweils einen von zwei logischen Zuständen annehmen, die zwei verschiedenen Spannungspegeln auf einer ersten, zweiten und dritten Steuerleitung jedes Bus-Systems entsprechen.

3. Datenübertragungssystem nach Anspruch 1, dadurch gekennzeichnet, dass mindestens eine zusätzliche dritte Sende-/Empfangseinrichtung an das erste oder zweite Bus-System am ersten bzw. zweiten Ort angeschlossen ist, zur Datenübertragung zu einem dritten Bus-System an einem dritten Ort über ein zusätzliches Übertragungsmedium und eine vierte Sende-/Empfangseinrichtung am dritten Ort.

4. Datenübertragungssystem nach Anspruch 1, dadurch gekennzeichnet, dass die erste und die zweite Sende-/Empfangseinrichtung und das erste und das zweite Bus-System zusammen am gleichen Ort angeordnet sind.

5. Datenübertragungssystem nach Anspruch 4, dadurch gekennzeichnet, dass die Funktionen der ersten und der zweiten Sende-/Empfangseinrichtung in einem Gerät vereinigt sind.

6. Datenübertragungssystem nach einem der Ansprüche 1 bis 5, dadurch gekennzeichnet, dass zwei im wesentlichen identische Datenübertragungssysteme mit entgegengesetzter Übertragungsrichtung so angeordnet sind, dass zwischen dem ersten und dem zweiten Bus-System eine Datenübertragung in beiden Richtungen möglich ist.

## Claims

1. Data transmission system for the transmission of data signals between a first bus (B1) at a first site, which is connected to a local data source (D1) and possibly to one or more local data receivers (D2, D3), and a second bus (B2) of the same kind at a second site, with said second bus being connected to one or more local data receivers (D4, D5) and possibly to a local data source, with an extension circuitry comprising a first transceiver connectable to the first bus, a second transceiver connectable to the second bus, and a transmission medium (21) for data and control signals interconnecting the two transceivers, whereby for the time succession of data and control signals of each bus the following applies:
- the local data source delivers data signals bitparallel to the data lines (DIO 1–8) of the bus,
- the local data source delivers to all local data receivers a first control signal (DAV) enabling the reception of data signals, when a predetermined stabilization time (Td) has elapsed after delivery of the data signals to the data lines and when a second control signal $\overline{(NRFD)}$ acknowledging that all local data receivers are ready to receive data signals has been produced,
- the local data receivers receive data signals from the data lines (DIO 1–8),
- the first control signal (DAV) is terminated after a third control signal $\overline{(NDAC)}$ acknowledging the reception of data signals by all local data receivers has been produced,
- the local data source delivers new data signals to the data lines,
characterized in that in each cycle for the transmission of data signals via the two transceivers the following data and control signals are produced in sequence:
- after the data source (D1) of the first bus (B1) has delivered data signals to the data lines (1 DIO 1–8) of this bus, these data signals are delivered to the data lines (2 DIO 1–8) of the second bus (B2) via the first and the second transceiver, the first transceiver receives the first control signal (DAV1) from the data source of the first bus, the second transceiver receives a fourth control signal (tnb) from the first transceiver and delivers the first control signal (DAV2) for the second bus after the reception of the fourth control signal and after a predetermined stabilization time (Td) of the data signals of the second bus has elapsed and after the second control signal $\overline{(NRFD2)}$ for the second bus has been produced,
- the data receivers of the second bus receive data signals from the data lines of the second bus,
- the second transceiver receives the third control signal $\overline{(NDAC2)}$ for the second bus,
- the first transceiver receives a fifth control signal $\overline{(rnb)}$ from the second transceiver acknowledging the reception of data signals by all data receivers of the second bus,
- the first control signal (DAV1) for the first bus is terminated, after the third control signal $\overline{(NDAC1)}$ for the first bus acknowledging the reception of data signals by all data receivers of the first and second bus has been produced, and
- the data source of the first bus delivers new data signals to the data lines of the first bus at the beginning of a new cycle.

2. Data transmission system according to claim 1, characterized in that the first, the second and the third control signals of the first respectively the second bus are each of one of two logical states, corresponding to two different voltage levels on a first, a second and a third control line of either bus.

3. Data transmission system according to claim 1, characterized in that at least one additional third transceiver is connected to the first or the second bus at the first respectively second site for data transmission to a third bus at a third site via an additional transmitting medium and a fourth transceiver at the third site.

4. Data transmission system according to claim 1, characterized in that the first and the second transceiver and the first and the second bus are located at the same site.

5. Data transmission system according to claim 4, characterized in that the functions of the first and the second transceiver are combined within a single unit.

6. Data transmission system according to one of the claims 1 to 5, characterized in that two data transmission systems substantially identical and with opposed directions of transmission are disposed for permitting data transmission in both directions between the first and the second bus.

## Revendications

1. Système de transmission de données pour transmettre des signaux de données entre un premier système (B1) de barres omnibus (bus) en un premier lieu, lequel est relié à une source locale de données (D1) et éventuellement à un ou plusieurs récepteurs locaux de données (D2, D3), et un second système analogue (B2) de barres omnibus en un second lieu, lequel est relié à un ou plusieurs récepteurs loxaux de données (D4, D5) et éventuellement à une source locale de données, avec un circuit expanseur, qui présente une première installation d'émission/réception raccordable au premier système de bus, une seconde installation d'émission/réception raccordable au second système de bus et un milieu de transmission (21) pour signaux de données et de commande reliant les deux installations d'émission/réception, par quoi compte, pour la succession temporelle de signaux de données et de commande de chaque système de bus:
- la source locale de données fournit des signaux de données en parallèle par bit aux lignes de données (DIO 1–8) du système de bus,
- la source locale de données procure à tous les récepteurs locaux de données un premier signal de commande (DAV) relâchant la réception de signaux de données quand, après livraison des signaux de données aux lignes de données, un temps ($T_d$) de stabilisation prédéterminé est écoulé, et quand un second signal de commande $\overline{(NRFD)}$, confirmant la disponibilité de tous les récepteurs locaux de données pour la réception de signaux de données, a été produit,
- les récepteurs locaux de données recueillent des signaux de données provenant des lignes de données (DIO 1–8),
- le premier signal de commande (DAV) est achevé, après qu'un troisième signal de commande $\overline{(NDAC)}$, confirmant la réception des signaux de données par tous les récepteurs locaux de données, a été produit,
- la source locale de données fournit de nouveaux signaux de données aux lignes de données,

caractérisé en ce que, dans chaque cycle de transfert de signaux de données par l'intermédiaire des deux installations d'émission/réception, les signaux suivants de données et de commande sont successivement produits:
- après que la source de données (D1) du premier système de bus (B1) a fourni des signaux de données aux lignes de données (1 DIO 1–8) de ce système de bus, ces signaux de données par l'intermédiaire de la première et de la seconde installation d'émission/réception sont fournis aux lignes de données (2 DIO 1–8) du second système de bus (B2), la première installation d'émission/réception reçoit, de la source de données du premier système de bus, le premier signal de commande (DAV1), la seconde installation d'émission/réception reçoit de la première un quatrième signal de commande (tnb) et, après sa réception et après l'écoulement d'un temps prédéterminé de stabilisation ($T_d$) des signaux de données du second système de bus, et quand le second signal de commande $\overline{(NRFD2)}$ a été produit pour le second système de bus, le premier signal de commande (DAV2) est déclenché pour le second système de bus,
- les récepteurs de données du second système de bus accueillent des signaux de données des lignes de données du second système de bus,
- la seconde installation d'émission/réception reçoit le troisième signal de commande $\overline{(NDAC2)}$ pour le second système de bus,
- la première installation d'émission/réception reçoit de la seconde un cinquième signal de commande $\overline{(rnb)}$ qui confirme l'accueil des signaux de données par tous les récepteurs de données du second système de bus,
- le premier signal de commande (DAV1) est terminé pour le premier système de bus après que le troisième signal de commande $\overline{(NDAC1)}$, confirmant l'accueil des signaux de données par tous les récepteurs de données du premier et du second système de bus, était produit pour le premier système de bus, et
- la source de données du premier système de bus donne, pour commencer un nouveau cycle, de nouveaux signaux de données aux lignes de données du premier système de bus.

2. Système de transmission de données selon la revendication 1, caractérisé en ce que le premier, deuxième et troisième signal de commande pour le premier ou respectivement le second système de bus acceptent chaque fois l'un de deux états logiques, qui correspondent à deux niveaux de tension différents sur la première, la deuxième et la troisième ligne de commande de chaque système de bus.

3. Système de transmission de données selon la revendication 1, caractérisé en ce que, au moins une troisième installation additionnelle d'émission/réception est raccordée en un premier ou respectivement un second endroit au premier ou au second système de bus, pour la transmission de données à un troisième système de bus en un troisième endroit par l'intermédiaire d'un milieu de transmission additionnel et une quatrième installation d'émission/réception au troisième endroit.

4. Système de transmission de données selon la revendication 1, caractérisé en ce que la première et la seconde installation d'émission/réception et le premier et le second système de bus sont disposés ensemble au même endroit.

5. Système de transmission de données selon la revendication 4, caractérisé en ce que les fonctions de la première et de la second installation d'émission/réception sont réunies dans un appareil.

6. Système de transmission de données selon l'une des revendications 1 à 5, caractérisé en ce que deux systèmes, identiques pour l'essentiel, de transmission de données avec des sens opposés de transmission sont disposés de façon que, entre le premier et le second système de bus, une transmission des données est possible dans les deux directions.

QUELLE

DAV
NRFD
NDAC

EMPFÄNGER

8 LEITUNGEN
DIO 1-8

EMPFÄNGER

11
13
15

EMPFÄNGER

ZU ANDEREN EMPFÄNGERN
(FALLS VORHANDEN)

Fig. 1

Fig. 2

# Fig. 3

**UNTER-SYSTEM S1**
(„LOKALER" TEIL DES SYSTEMS)

**UNTER-SYSTEM S2**
("ENFERNTER" TEIL DES SYSTEMS)

GERÄT I — D1

GERÄT I — D2

GERÄT I — D3

UNTERSAMMEL-LEITUNG B1

DAV 1
NRFD 1
NDAC 1

1DIO1-8

UMSETZER

TEIL DES EXTENDERS E1

tnb
rnb
DATEN

21

UMSETZER

TEIL DES EXTENDERS E2

DAV 2
NRFD 2
NDAC 2

2DIO1-8

UNTERSAMMEL-LEITUNG B2

I GERÄT — D4

I GERÄT — D5

Fig. 4

| ZUSTAND NR. | AUSGANGSSIGNALE | | |
|---|---|---|---|
| | tnb | NRFD1 | NDAC1 |
| 1 | F | T | T |
| 2 | F | F | T |
| 3 | T | T | T |
| 4 | F | T | F |

Fig. 5

Fig. 6

Fig. 7

Fig. 8

Labels in figure: rnb, DAV 2, ZUSTAND 6, 205 SEKUNDÄRE VERKNÜPFUNGS-SCHALTUNG, Y, Z, 203, 204, TAKT 2, DY, DZ, 202 PRIMÄRE VERKNÜPFUNGS-SCHALTUNG, J, 201, VERZÖG., 206, tnb, NDAC 2, NRFD2

Fig. 9